# EUROPÄISCHE PATENTSCHRIFT

(11) **EP 4 188 731 B1**
(45) Veröffentlichungstag und Bekanntmachung des Hinweises auf die Patenterteilung: **16.09.2026**
(21) Anmeldenummer: 21745814.0
(22) Anmeldetag: 16.07.2021
(51) Int. Cl.: B60K 1/00, B60K 17/16, B60K 17/08, H02K 5/06

(54) **ELEKTRISCHE ANTRIEBSVORRICHTUNG**
ELECTRIC DRIVE DEVICE
DISPOSITIF D'ENTRAÎNEMENT ÉLECTRIQUE

(30) Priorität: 30.07.2020 DE 102020209606
(43) Veröffentlichungstag der Anmeldung: 07.06.2023
(73) Patentinhaber: Robert Bosch GmbH, 70442 Stuttgart (DE)
(72) Erfinder: HEGEDUS, Csaba, 2030 Erd (HU); HAISER, Heinz-Bernd, 71638 Ludwigsburg (DE); SCHLITTENBAUER, Tobias, 71679 Asperg (DE)
(86) Internationale Anmeldenummer: PCT/EP2021/070051
(87) Internationale Veröffentlichungsnummer: WO 2022/023092

(56) Entgegenhaltungen:
- WO-A1-2013/069774
- CN-A- 109 378 945
- DE-A1- 102011 080 038
- DE-A1- 102014 216 636

## Beschreibung

Die vorliegende Erfindung betrifft eine elektrische Antriebsvorrichtung.

### Stand der Technik

Es ist allgemein bekannt, dass aufgrund begrenzter Ölressourcen und der Notwendigkeit die CO₂-Emmissionen im Straßenverkehr zu reduzieren, der Einsatz von Elektro- und Hybridfahrzeugen forciert wird. Die Antriebseinheit eines solchen Fahrzeugs besteht aus einem Elektromotor, der üblicherweise über ein Getriebe mit den Rädern verbunden ist. Des Weiteren weist die Antriebseinheit eine Leistungselektronik oder einen Inverter auf, welche bzw. welcher den Elektromotor mit Energie versorgt.

Aus der DE 10 2011 080 038 A1 ist eine Antriebseinheit für ein Elektrofahrzeug bekannt, welche einen Elektromotor aufweist. Der Elektromotor umfasst eine Antriebsachse an deren offenen Ende eine Mitnahmeverzahnung angeordnet ist. Das Gehäuse des Elektromotors wird an der Seite des Drehzahlsensors durch einen Deckel luft- und fluiddicht verschlossen. Des Weiteren ist eine Getriebeeinheit vorgesehen, die mit dem Elektromotor zum Antrieb des jeweiligen Rades des Elektrofahrzeugs zusammenwirkt. Zusätzlich umfasst die Antriebseinheit eine Leistungselektronik.

Aus der Druckschrift DE 10 2014 216 636 A1 ist ebenfalls eine Antriebsvorrichtung für einen Fahrzeugantriebsstrang bekannt. Die Antriebsvorrichtung umfasst ein Getriebe mit einem Getriebegehäuse und eine in dem Getriebegehäuse angeordnete elektrische Maschine mit einem um eine Achse drehbar angeordneten Rotor und mit einem koaxial und radial innen dazu angeordneten Stator. Auf der dem Rotor abgewandten Seite eines ersten Zylinderbereiches eines Statorträgers ist ein radial innerer erster Aufnahmebereich in dem Getriebegehäuse vorgesehen. In dem Aufnahmebereich des Getriebegehäuses ist eine Leistungselektronik zum Ansteuern der elektrischen Maschine eingesetzt.

Nachteilig an dem erwähnten Stand der Technik ist, dass die Antriebsvorrichtung stets in einem einzigen Montagevorgang zusammengebaut werden muss. Es ist nicht möglich, zunächst in einem ersten Montageschritt die Leistungselektronik mit der elektrischen Maschine zu einer funktionsfähigen Einheit zu verbinden (quasi als vormontierte Einheit) und das Getriebe nachträglich an diese bereits funktionsfähige Einheit anzubauen, um zur voll funktionsfähigen Antriebsvorrichtung (bestehend aus elektrischer Maschine, Leistungselektronik, Getriebe - als elektrische Antriebsachse bzw. eAchse bezeichnet) zu gelangen.

Es besteht daher der Bedarf nach einem elektrischen Antrieb, dessen elektrische Maschine und Leistungselektronik vereinfacht vormontiert werden können.

Weitere elektrische Antriebsvorrichtungen sind auch aus der CN 109 378 945 A und der WO 2013/069774 A1 bekannt.

### Offenbarung der Erfindung

Die erfindungsgemäße Vorrichtung mit dem Kennzeichen des Anspruchs 1 hat die Vorteile, dass die elektrische Maschine und Leistungselektronik des elektrischen Antriebs zunächst vereinfacht vormontiert werden kann und das Getriebe nachträglich eingebaut werden kann - vorzugsweise an einem anderen Standort.

Erfindungsgemäß ist dazu ein elektrischer Antrieb vorgesehen, der eine elektrische Maschine, eine Leistungselektronik und ein einteiliges Systemgehäuse umfasst, wobei das einteilige Systemgehäuse drei voneinander abgegrenzte erste, zweite und dritte Haupträume aufweist, wobei die elektrische Maschine in dem ersten Hauptraum und die Leistungselektronik in dem zweiten Hauptraum miteinander verbunden und vormontiert sind. Durch diesen erfindungsgemäßen Grundgedanken ist es möglich, zunächst die elektrische Maschine und die Leistungselektronik in einem einteiligen Systemgehäuse vorab zu montieren, diese so vormontierte Antriebseinheit z.B. an einen anderen geographischen Ort zu transportieren und dort mit einem beliebigen Getriebe zur vollständigen Antriebseinheit zu vervollständigen.

Durch die in den abhängigen Ansprüchen genannten Maßnahmen sind vorteilhafte Weiterbildungen der in dem unabhängigen Anspruch angegebenen Vorrichtung möglich.

Vorteilhafterweise sind die elektrische Maschine und die Leistungselektronik voll funktionsfähig miteinander verbunden und vormontiert. Entsprechend müssen keine weiteren Montageschritte vorgenommen werden, um die elektrische Maschine und Leistungselektronik zum Einsatz zu bringen.

Weiterhin ist vorteilhaft, dass ein Getriebe in dem dritten Hauptraum angeordnet ist. Entsprechend kann ein beliebiges Getriebe in dem dritten Hauptraum eingebracht bzw. anmontiert werden, um die vollständige Antriebseinheit herzustellen.

Vorteilhafterweise ist Leistungselektronik mantelseitig an der elektrischen Maschine angeordnet. Dies hat sowohl Vorteile bzgl. Bauraum als auch Wärmeabfuhr / Kühlung. Weiterhin kann die Stromführung zwischen Leistungselektronik und elektrischer Maschine dadurch einfach gestaltet werden.

Das Getriebe ist vorteilhafterweise axial an der elektrischen Maschine angeordnet ist. Dadurch lassen sich bevorzugte Ausführungen von Rotor- und Getriebeingangswelle mit gemeinsamem Lager erzielen.

Da der erste Hauptraum gegen den dritten Hauptraum abgedichtet ist, vorzugsweise mit einem Radialwellendichtring ist es möglich, den ersten Hauptraum, in dem die elektrische Maschine angeordnet ist, trocken zu betreiben bzw. auf eine andere Art zu schmieren bzw. mit speziellen Kühlfluiden (gasförmig, flüssig) zu kühlen, als den dritten Hauptraum, in dem das Getriebe angeordnet ist bzw. wird.

Erfindungsgemäß ist das einteilige Systemgehäuse aus Aluminium gefertigt. Die Verwendung von Aluminium hat ein geringeres Gewicht zur Folge, ist kostengünstig und kann alle notwendigen Anforderungen an geometrische Toleranzen und Festigkeitswerte erfüllen.

Der erste Hauptraum ist vorteilhaft durch ein Statorgehäuse abgeschlossen. Das Statorgehäuse, als eine Art Topf ausgeführt, stellt sozusagen den Deckel dar, indem die elektrische Maschine eingeschlossen wird und somit der erste Hauptraum des einteiligen Systemgehäuses geschlossen wird. Das Statorgehäuse bildet mit seiner Außenkontur und der entsprechenden Gegenkontur im Systemgehäuse den ersten Hohlraum.

Vorteilhaft wird der zweite Hauptraum durch einen Leistungselektronikdeckel abgeschlossen. Die Leistungselektronik ist somit vor Umwelteinflüssen geschützt (Wasser, Staub, Verschmutzung, etc.).

Weiterhin wird der dritte Hauptraum durch einen Getriebedeckel abgeschlossen. Entsprechend ist das Getriebe vor Verschmutzung, etc. geschützt.

Diese drei Deckel werden vorzugsweise mittels eines Dichtmittels, welches entlang eines Flansches aufgetragen wird, und einer entsprechenden Verschraubung abgedichtet. Das Dichtmittel kann bspw. als Flüssigdichtung, Papierdichtung oder aus Elastomeren dargestellt werden. Als Alternative zu Dichtmittel und Verschraubung ist auch eine Schweißung möglich.

Das Getriebe ist vorteilhafterweise ein zweistufiges Stirnradgetriebe und umfasst ein Differential und/oder Parksperre und/oder Disconnect. Somit kann mittels des Getriebes eine Parkfunktion umgesetzt werden bzw. ein Freilauf realisiert werden. Zur Lagerung der Wellen des Getriebes sind entsprechende Lagersitze im Systemgehäuse und auf der entsprechenden gegenüberliegenden Seite im Deckel angebracht.

Die elektrische Maschine umfasst einen Rotor und einen Stator, wobei der Rotor drehfest auf einer Rotorwelle angeordnet ist. Der Stator dagegen ist in einem Statorgehäuse angeordnet.

Das Statorgehäuse und der erste Hohlraum werden mit einer Kühlflüssigkeit durchpumpt. Dadurch wird die elektrische Maschine vorteilhafterweise gekühlt. Auch die Abwärme des Getriebes wird an diese Wärmesenke abgeführt.

Der elektrische Antrieb weist erfindungsgemäß eine zweiteilige Rotor-Getriebe-Eingangswelle auf, bestehend aus einer Rotorwelle und einer Getriebewelle, wobei die Rotorwelle und die Getriebewelle in einem gemeinsamen Lager gelagert sind und ein Drehmoment mittels einer Steckverzahnung übertragen wird.

In diesem Fall bildet die Rotorwelle beispielsweise eine Außensteckverzahnung und die Getriebeingangswelle beispielsweise eine Innensteckverzahnung. Das Lager weist beispielsweise einen verlängerten Innenring auf, in welchen sowohl die Rotor- als auch Getriebeeingangswelle beispielsweise eingepresst werden. Dadurch ist eine vereinfachte Montage des Getriebes möglich.

Weitere Merkmale und Vorteile von Ausführungsformen der Erfindung ergeben sich aus der nachfolgenden Beschreibung in Bezug auf die beigefügten Zeichnungen.

### Kurze Beschreibung der Zeichnungen

Es zeigen:
- Fig. 1:: eine perspektivische Darstellung des elektrischen Antriebs integriert in ein einteiliges Systemgehäuse;
- Fig. 2:: eine Schnittdarstellung eines elektrischen Antriebs mit einer einteiligen Rotor- und Getriebeeingangswelle (nicht erfindungsgemäß);
- Fig. 3:: eine Schnittdarstellung des erfindungsgemäßen elektrischen Antriebs mit einer zweiteiligen Rotorwelle Getriebewelle;

Die in den Figuren dargestellten Zeichnungen sind aus Gründen der Übersichtlichkeit nicht notwendigerweise maßstabsgetreu abgebildet. Gleiche Bezugszeichen bezeichnen im Allgemeinen gleichartige oder gleichwirkende Komponenten.

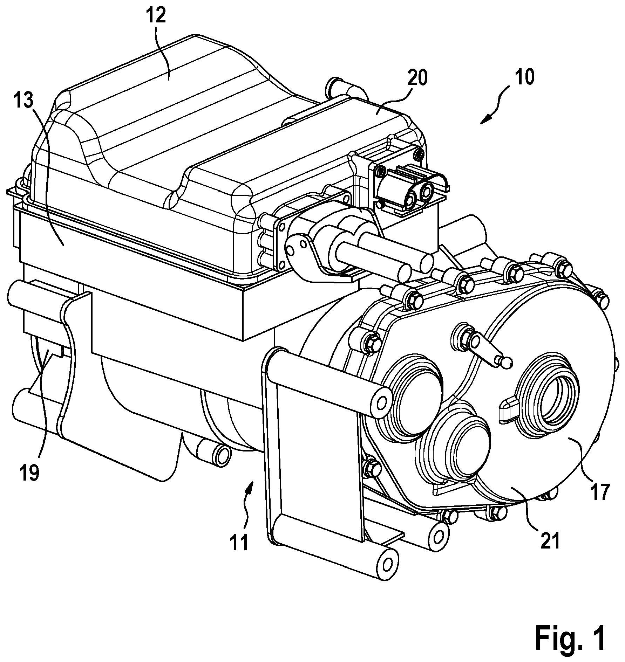

Figur 1 zeigt eine perspektivische Darstellung des elektrischen Antriebs 10 integriert in ein einteiliges Systemgehäuse 13. Das Systemgehäuse 13 weist drei Hohlräume auf. Einen ersten Hohlraum 14, einen zweiten Hohlraum 15 und einen dritten Hohlraum 16. Im ersten Hohlraum 14 die die elektrische Maschine 11 eingebaut, im zweiten Hohlraum 15 ist die Leistungselektronik 12 eingebaut und der dritte Hohlraum 15 umfasst das Getriebe 17. Leistungselektronik 12 wie auch elektrische Maschine 11 werden in das einteilige Systemgehäuse 13 montiert und sind voll funktionsfähig, können also eine gemeinsame Funktionsprüfung durchlaufen und vereinfacht montiert werden. Der so vormontierte elektrische Antrieb 10 kann somit funktionsfähig vom Ort der Vorabmontage an einen anderen geographischen Ort gesendet werden und dort mit einem beliebigen passenden Getriebe 17 zum fertigen elektrischen Antrieb / Achsantrieb bzw. zur fertigen eAchse montiert werden. Der elektrische Antrieb umfasst weiterhin einen Leistungselektronikdeckel 20, einen Getriebedeckel 21 und ein Statorgehäuse 19. Das Statorgehäuse bildet mit seiner Außenkontur und der entsprechenden Gegenkontur im Systemgehäuse einen ersten Hohlraum 14. Weiterhin ist ein Statorkühlmantel 38 vorgesehen, der mit Kühlflüssigkeit 28 durchpumpt wird. Hierbei können sowohl Gase als auch Flüssigkeiten zum Einsatz kommen. Entsprechend wird die elektrische Maschine 11 gekühlt. Die Abwärme des Getriebes 17 wird ebenfalls an diese Wärmesenke (elektrische Maschine bzw. Hohlraum 14) abgeführt.

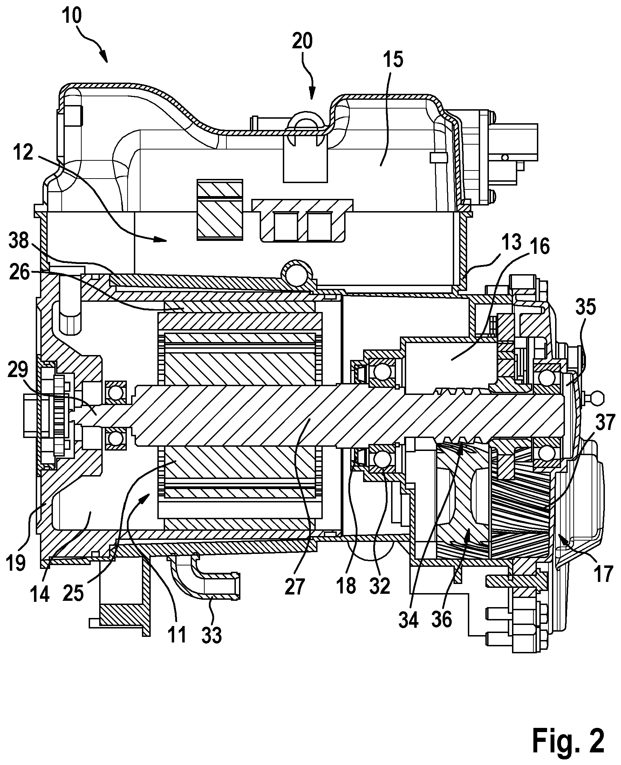

Figur 2 zeigt eine Schnittdarstellung eines elektrischen Antriebs 10 mit einer einteiligen Rotorwelle 27 und Getriebeeingangswelle 31. Gleiche Elemente in Bezug auf Figur 1 sind mit gleichen Bezugszeichen versehen und werden nicht näher erläutert. Im dritten Hauptraum ist ein Getriebe 17 angeordnet. Die Leistungselektronik 12 ist mantelseitig an der elektrischen Maschine 11 angeordnet. Das Getriebe 17 ist axial an der elektrischen Maschine angeordnet. Der erste Hauptraum 14 ist gegen den dritten Hauptraum 16 abgedichtet, vorzugsweise mit einem Radialwellendichtring. Das einteilige Systemgehäuse 13 ist vorzugsweise aus Aluminium gefertigt. Der erste Hauptraum 14 wird durch ein Statorgehäuse abgeschlossen und der zweite Hauptraum 15 wird durch einen Leistungselektronikdeckel abgeschlossen. Das Getriebe 17 ist ein zweistufiges Stirnradgetriebe und umfasst ein Differential 22 und kann mit bzw. ohne Parksperre 23 bzw. mit oder ohne Disconnect 24 (Freilauf) ausgeführt sein. Die elektrische Maschine 11 umfasst einen Rotor 25 und Stator 26, wobei der Rotor 25 drehfest auf einer Rotorwelle 27 angeordnet ist. Der Kühlmantel mit einer Kühlflüssigkeit durchpumpt, die über einen Kühlwasseranschluss 33 ausgeleitet wird. Der elektrische Antrieb weist eine einteilige Rotor-Getriebe-Eingangswelle 29 auf, wobei auf der Rotor-Getriebe-Eingangswelle 29 ein Ritzel 30 angeordnet ist, welches das Ritzel einer ersten Zahnradstufe 36 des Getriebes 17 darstellt.

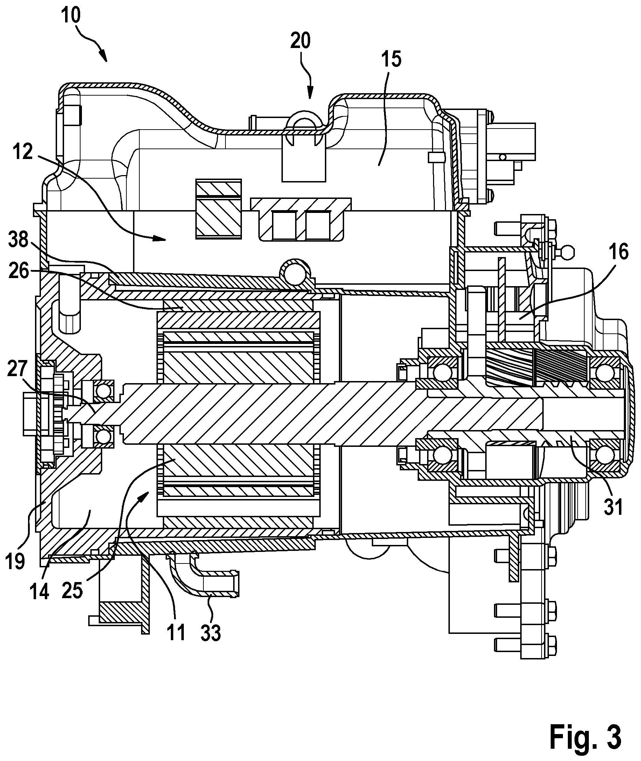

Figur 3 zeigt eine Schnittdarstellung des erfindungsgemäßen elektrischen Antriebs 10 mit einer zweiteiligen Rotorwelle 27 und Getriebewelle 31. Gleiche Elemente in Bezug auf Figur 1 und Figur 2 sind mit gleichen Bezugszeichen versehen und werden nicht näher erläutert.

Figur 3 zeigt eine Alternative Ausführungsform zur einteiligen Rotor-Getriebe-Eingangswelle. Der elektrische Antrieb umfasst eine zweiteilige Rotor-Getriebe-Eingangswelle 29, bestehend aus einer Rotorwelle 27 und einer Getriebewelle 31. Die Rotorwelle 27 und die Getriebewelle 31 sind in einem gemeinsamen Lager 32 gelagert und übertragen das Dehmoment mittels einer Steckverzahnung 33. In der gezeigten Ausführungsform bildet die Rotorwelle 27 eine Außensteckverzahnung und die Getriebewelle 31 (bzw. Getriebeeingangswelle) eine Innensteckverzahnung. Das Lager weist einen verlängerten Innenring auf, in welchen sowohl Rotorwelle 27 als auch Getriebewelle 31 eingepresst sind.

## Patentansprüche

1. Elektrischer Antrieb (10), umfassend eine elektrische Maschine (11), eine Leistungselektronik (12) und ein einteiliges Systemgehäuse (13), wobei das einteilige Systemgehäuse (13) drei voneinander abgegrenzte erste, zweite und dritte Haupträume (14, 15, 16) aufweist, wobei die elektrische Maschine (11) in dem ersten Hauptraum (14) und die Leistungselektronik (12) in dem zweiten Hauptraum (15) miteinander verbunden sind, **dadurch gekennzeichnet, dass** das einteilige Systemgehäuse (13) aus Aluminium gefertigt ist und dass der elektrische Antrieb (10) eine zweiteilige Rotor-Getriebe-Eingangswelle (29) aufweist, bestehend aus einer Rotorwelle (27) und einer Getriebewelle (31), wobei die Rotorwelle (27) und die Getriebewelle (31) in einem gemeinsamen Lager (32) gelagert sind und ein Drehmoment mittels einer Steckverzahnung (33) übertragen wird.

2. Elektrischer Antrieb (10) nach Anspruch 1, **dadurch gekennzeichnet, dass** die elektrische Maschine (11) und die Leistungselektronik (12) voll funktionsfähig miteinander verbunden sind.

3. Elektrischer Antrieb (10) nach einem der vorhergehenden Ansprüche, **dadurch gekennzeichnet, dass** ein Getriebe (17) in dem dritten Hauptraum (16) angeordnet ist.

4. Elektrischer Antrieb (10) nach einem der vorhergehenden Ansprüche, **dadurch gekennzeichnet, dass** die Leistungselektronik (12) mantelseitig an der elektrischen Maschine (11) angeordnet ist.

5. Elektrischer Antrieb (10) nach einem der vorhergehenden Ansprüche, **dadurch gekennzeichnet, dass** das Getriebe (17) axial an der elektrischen Maschine (11) angeordnet ist.

6. Elektrischer Antrieb (10) nach einem der vorhergehenden Ansprüche, **dadurch gekennzeichnet, dass** das der erste Hauptraum (14) gegen den dritten Hauptraum (16) abgedichtet ist, vorzugsweise mit einem Radialwellendichtring (18).

7. Elektrischer Antrieb (10) nach einem der vorhergehenden Ansprüche, **dadurch gekennzeichnet, dass** der erste Hauptraum (14) durch ein Statorgehäuse (19) abgeschlossen wird.

8. Elektrischer Antrieb (10) nach einem der vorhergehenden Ansprüche, **dadurch gekennzeichnet, dass** der zweite Hauptraum (15) durch einen Leistungselektronikdeckel (20) abgeschlossen wird.

9. Elektrischer Antrieb (10) nach einem der vorhergehenden Ansprüche, **dadurch gekennzeichnet, dass** der dritte Hauptraum (16) durch einen Getriebedeckel (21) abgeschlossen wird.

10. Elektrischer Antrieb (10) nach einem der vorhergehenden Ansprüche, **dadurch gekennzeichnet, dass** das Getriebe (17) ein zweistufiges Stirnradgetriebe ist und ein Differential (22) und/oder Parksperre (23) und/oder Disconnect (24) umfasst.

11. Elektrischer Antrieb (10) nach einem der vorhergehenden Ansprüche, **dadurch gekennzeichnet, dass** die elektrische Maschine (11) einen Rotor (25), einen Stator (26) umfasst, wobei der Rotor (25) drehfest auf einer Rotorwelle (27) angeordnet ist.

## Claims

1. Electric drive (10) comprising an electric machine (11), a power electronics system (12) and a one-piece system housing (13), wherein the one-piece system housing (13) has three first, second and third main chambers (14, 15, 16) which are separated from one another, wherein the electric machine (11) in the first main chamber (14) and the power electronics system (12) in the second main chamber (15) are connected to one another, **characterized in that** the one-piece system housing (13) is made of aluminium and **in that** the electric drive (10) has a two-piece rotor-transmission input shaft (29) consisting of a rotor shaft (27) and a transmission shaft (31), wherein the rotor shaft (27) and the transmission shaft (31) are mounted in a common bearing (32) and a torque is transmitted by means of a spline toothing (33).

2. Electric drive (10) according to Claim 1, **characterized in that** the electric machine (11) and the power electronics system (12) are fully functionally connected to each other.

3. Electric drive (10) according to either of the preceding claims, **characterized in that** a transmission (17) is arranged in the third main chamber (16).

4. Electric drive (10) according to any of the preceding claims, **characterized in that** the power electronics system (12) is arranged on the casing of the electric machine (11).

5. Electric drive (10) according to any of the preceding claims, **characterized in that** the transmission (17) is arranged axially on the electric machine (11).

6. Electric drive (10) according to any of the preceding claims, **characterized in that** the first main chamber (14) is sealed off from the third main chamber (16), preferably with a radial shaft sealing ring (18).

7. Electric drive (10) according to any of the preceding claims, **characterized in that** the first main chamber (14) is closed by a stator housing (19).

8. Electric drive (10) according to any of the preceding claims, **characterized in that** the second main chamber (15) is closed by a power electronics system cover (20).

9. Electric drive (10) according to any of the preceding claims, **characterized in that** the third main chamber (16) is closed by a transmission cover (21).

10. Electric drive (10) according to any of the preceding claims, **characterized in that** the transmission (17) is a two-stage spur gear mechanism and comprises a differential (22) and/or parking lock (23) and/or disconnect (24).

11. Electric drive (10) according to any of the preceding claims, **characterized in that** the electric machine (11) comprises a rotor (25) and a stator (26), wherein the rotor (25) is arranged in a rotationally fixed manner on a rotor shaft (27).

## Revendications

1. Entraînement électrique (10), comprenant une machine électrique (11), une électronique de puissance (12) et un boîtier de système monobloc (13), le boîtier de système monobloc (13) comportant trois premier, deuxième et troisième espaces principaux (14, 15, 16) délimités entre eux, la machine électrique (11) dans le premier espace principal (14) et l'électronique de puissance (12) dans le deuxième espace principal (15) étant reliées l'une à l'autre, **caractérisé en ce que** le boîtier de système monobloc (13) est fabriqué en aluminium et que l'entraînement électrique (10) comporte un arbre d'entrée de transmission de rotor (29) en deux parties, constitué d'un arbre de rotor (27) et d'un arbre de transmission (31), l'arbre de rotor (27) et l'arbre de transmission (31) étant montés dans un palier commun (32) et un couple de rotation étant transmis au moyen d'une denture cannelée (33).

2. Entraînement électrique (10) selon la revendication 1, **caractérisé en ce que** la machine électrique (11) et l'électronique de puissance (12) sont reliées l'une à l'autre de manière totalement fonctionnelle.

3. Entraînement électrique (10) selon l'une des revendications précédentes, **caractérisé en ce qu'**une transmission (17) est disposée dans le troisième espace principal (16).

4. Entraînement électrique (10) selon l'une des revendications précédentes, **caractérisé en ce que** l'électronique de puissance (12) est disposée du côté de l'enveloppe sur la machine électrique (11).

5. Entraînement électrique (10) selon l'une des revendications précédentes, **caractérisé en ce que** la transmission (17) est disposée axialement sur la machine électrique (11).

6. Entraînement électrique (10) selon l'une des revendications précédentes, **caractérisé en ce que** le premier espace principal (14) est rendu étanche par rapport au troisième espace principal (16), de préférence par une bague d'étanchéité d'arbre radiale (18).

7. Entraînement électrique (10) selon l'une des revendications précédentes, **caractérisé en ce que** le premier espace principal (14) est fermé par un boîtier de stator (19).

8. Entraînement électrique (10) selon l'une des revendications précédentes, **caractérisé en ce que** le deuxième espace principal (15) est fermé par un couvercle (20) d'électronique de puissance.

9. Entraînement électrique (10) selon l'une des revendications précédentes, **caractérisé en ce que** le troisième espace principal (16) est fermé par un couvercle de transmission (21).

10. Entraînement électrique (10) selon l'une des revendications précédentes, **caractérisé en ce que** la transmission (17) est une transmission à engrenages droits à deux étages et comprend un différentiel (22) et/ou un frein de stationnement (23) et/ou un système de déconnexion (24).

11. Entraînement électrique (10) selon l'une des revendications précédentes, **caractérisé en ce que** la machine électrique (11) comprend un rotor (25), un stator (26), le rotor (25) étant disposé de manière solidaire en rotation sur un arbre de rotor (27).
